# EUROPÄISCHE PATENTSCHRIFT

(11) **EP 1 526 316 B1**
(45) Veröffentlichungstag und Bekanntmachung des Hinweises auf die Patenterteilung: **03.01.2007**
(21) Anmeldenummer: 04105011.3
(22) Anmeldetag: 13.10.2004
(51) Int. Cl.: F16L 27/087

(54) **Radiale Drehdurchführung**
Radial rotary connection
Passage radial tournant

(30) Priorität: 24.10.2003 DE 10349968
(43) Veröffentlichungstag der Anmeldung: 27.04.2005
(73) Patentinhaber: GAT Gesellschaft für Antriebstechnik mbH, 65201 Wiesbaden (DE)
(72) Erfinder: OTT, Stephan, 65201, Wiesbaden (DE); BOHRMANN, Thomas, 65307, Bad Schwalbach (DE)
(74) Vertreter: Weber, Dieter

(56) Entgegenhaltungen:
- WO-A-88/02663
- DE-A- 3 927 775
- US-A- 3 503 469
- US-A- 4 192 559
- US-A- 4 408 766
- US-A- 4 635 969
- PATENT ABSTRACTS OF JAPAN Bd. 1997, Nr. 11, 28. November 1997 (1997-11-28) -& JP 09 196265 A (RITSUKUSU KK), 29. Juli 1997 (1997-07-29)

## Beschreibung

Die Erfindung betrifft eine radiale Drehdurchführung mit mindestens einem Rotor und mindestens einem feststehenden Teil, wobei der mindestens eine Rotor mindestens zwei axial beabstandete Dichtflächen aufweist und wobei zwischen dem feststehenden Teil und dem Rotor zwei Gleitringe mit insgesamt mindestens zwei Dichtflächen angeordnet sind, wobei die Dichtflächen der Gleitringe mit den Rotordichtflächen zusammenwirken, und mit mindestens einem radialen Zufuhrdurchgang zwischen den Paaren zusammenwirkender Dichtflächen.

Drehdurchführungen für Fluide von einem feststehenden in ein drehendes Maschinenteil sind aus dem Stand der Technik bekannt. Das von allen Drehdurchführungen zu lösende technische Problem besteht darin, einen dichten Übergang zwischen zwei sich gegeneinander drehenden Teilen herzustellen.

Die aus dem Stand der Technik bekannten Drehdurchführungen sind entweder axiale Durchführungen, bei denen das Fluid entlang der Drehachse oder parallel dazu in das drehende Maschinenteil überführt wird, oder radiale Drehdurchführungen. Die japanische Patentschrift JP 09196265 A, von welcher die vorliegende Anmeldung ausgeht, zeigt eine solche radiale Drehdurchführung, bei der das Fluid in einer Richtung senkrecht zur Drehachse des drehenden Maschinenteils von dem feststehenden Maschinenteil in das drehende Teil überführt wird. Dabei sind an dem sich drehenden Teil, nachfolgend auch als Rotor bezeichnet, zwei ringförmige Ansätze vorgesehen, die axiale Dichtflächen aufweisen, deren Flächennormalen in Richtung der Drehachse zeigen und die ringförmig um die Drehachse des Rotors umlaufen. Dabei sind die Dichtflächen der beiden ringförmigen Ansätze einander zugewandt. Auf den Dichtflächen des Rotors stützen sich die Dichtflächen zweier Gleitringe ab. Die Gleitringe sind gegen das Mitdrehen mit dem Rotor an dem feststehenden Teil gesichert und ihre Dichtflächen werden mit Hilfe von sich gegen einen Abschnitt des feststehenden Teils abstützenden Federn gegen die Dichtflächen des Rotors gedrückt. Die Zuführung des Fluids erfolgt durch einen Kanal zwischen den beiden Gleitringen in einer Richtung senkrecht zur Drehachse des Rotors. Ein Austreten des Fluids wird so mit Hilfe der eben aufeinanderliegenden Dichtflächen des Rotors und der beiden Gleitringe und durch Dichtungen zwischen dem feststehenden Teil und den Gleitringen verhindert.

Die aus der JP 09196265 A bekannte Drehdurchführung hat einen sehr komplexen, voluminösen Aufbau. Der die Gleitdichtflächen tragende mit einer Welle verbundene Teil besteht aus zwei axial beabstandeten Rotorringen, denen jeweils ein Gleitring zugeordnet is. Die Rotorringe müssen abgedichtet auf der Welle fixiert sein. Jedem Rotorring ist ein eigener Gleitring zugeordnet, der zwar nicht mit rotiert, der jedoch axial schwimmend und federnd vorgespannt auf der Welle angeordnet ist, um unabhängig von etwaigen Bauteil- und Montagetoleranzen immer eine dichte Auflage seiner Gleitdichtflächen zu gewährleisten. Das feststehende Teil weist zur Lagerung und Abstützung der Gleitringe einen radial einwärts ragenden Bund auf, der zwischen den Gleitringen angeordnet ist und über Federn die Gleitringe an den Rotorring andrückt. Diese Bauweise beansprucht relativ viel Raum sowohl in axialer als auch in radialer Richtung.

Radiale (und auch axiale) Drehdurchführungen werden unter anderem für die interne Kühlmittelzufuhr bei Werkzeugmaschinen verwendet. Ein Nachteil dieser Drehdurchführungen liegt allerdings darin, daß sie relativ voluminös sind und an einer Werkzeugspindel entsprechend Platz benötigen. Dies ist insbesondere bei modernen Bearbeitungszentren störend, die ohnehin Platz für Werkzeugmagazine und Revolverköpfe benötigen. Auch eine Nachrüsten einer Kühlmittelzufuhr durch Austausch einer Spindel ohne Einrichtungen für Kühlmittelmittelzufuhr gegen eine Spindel mit entsprechenden Einrichtungen, scheitert oft an dem zusätzlich für die Drehdurchführung benötigten Platz.

Den gattungsbildenden US-Patenten 3,503,469 und 4,192,559 sind radiale Drehdurchführungen mit einem Rotor und einem feststehenden Teil bekannt, wobei zwischen dem Rotor und dem feststehenden Titel zwei Gleitringe vorgesehen sind, deren Dichtflächennormalen axial aufeinander zugerichtet sind.

Gegenüber diesem Stand der Technik liegt der vorliegenden Erfindung die Aufgabe zugrunde, eine radiale Drehdurchführung konstruktiv so zu gestalten, daß ihr Einbau in Bearbeitungszentren und eine Nachrüstung an bestehenden Einrichtungen vereinfacht wird und nicht an dem geringen vorhandenen Platz scheitert, wobei bei verbesserter Dichtwirkung ein Trockenlaufen und Festfressen der Dichtungen verhindert wird.

Diese Aufgabe wird dadurch gelöst, daß eine radiale Drehdurchführung bereitgestellt wird mit mindestens einem Rotor und mindestens einem feststehenden Teil, wobei der mindestens eine Rotor mindestens zwei Dichtflächen aufweist und wobei zwischen dem feststehenden Teil und dem Rotor zwei Gleitringe mit insgesamt mindestens zwei Dichtflächen angeordnet sind, wobei die Dichtflächen der Gleitringe mit den Rotordichtflächen zusammenwirken, und mit mindestens einem radialen Zufuhrdurchgang zwischen den Paaren zusammenwirkender Dichtflächen, wobei die Normalen auf die Dichtflächen des Rotors axial voneinander weg weisen, wobei die Normalen auf die Dichtflächen der Gleitringe axial aufeinander zu gerichtet sind und wobei die Gleitringe hydrostatisch kompensiert sind.

Bei dieser Ausgestaltung können die Gleitdichtflächen des Rotors an ein und demselben Bauteil angeordnet werden und ein besonderer Vorteil besteht bei dieser Konstruktion darin, daß sie mit einer verringerten axialen Höhe bereitgestellt werden kann.

Besonders bevorzugt ist eine Ausführungsform der Erfindung, bei der die axiale Höhe, d. h. die Abmessung der Drehdurchführung in einer Richtung parallel zur Drehachse des Rotors weniger als 40 mm, vorzugsweise weniger als 20 mm und besonders bevorzugt 18 mm aufweist. Durch entspre - chende Optimierung der einzelnen Bauteile ist dies bei gängigen Nenndurchmessern entsprechender Wellen von 20 mm bis etwa 100 mm auf Basis der erfindungsgemäßen Konstruktion ohne weiteres erreichbar.

Eine solche geringe axiale Bauhöhe ermöglicht den Einbau in Werkzeugmaschinen direkt zwischen den Spindellagern selbst bei kurzem Abstand zwischen den Lagern der Welle, und benötigt daher keinerlei zusätzlichen Raum. Aufgrund ihrer Anordnung zwischen den Lagern ist es sinnvoll, wenn die an diesen Stellen verwendeten Drehdurchführungen vollständig leckfrei sind, um die benachbarten Lager nicht zu beeinträchtigen.

Um eine Beeinträchtigung benachbarter Bauelemente zu verhindern ist es deshalb zweckmäßig, wenn die axial außerhalb der Gleitringdichtungen liegenden Leckräume der Drehdurchführung mit ringförmigen gegen die Welle drückenden Leckraumdichtungen abgedichtet sind.

Generell ist es vorteilhaft, wenn das Verhältnis des Durchmessers der Welle zur axialen Höhe der Drehdurchführung größer als 1, vorzugsweise größer als 1,5 und besonders bevorzugt größer als 2 ist. Dies gewährleistet verhältnismäßig geringe Einbaumaße der Drehdurchführungen auch für große Wellendurchmesser.

Zweckmäßig ist es, wenn das maximale Verhältnis zwischen der radialen Dicke der Drehdurchführung und dem Durchmesser der Welle kleiner als 1/3, vorzugsweise kleiner als 1/5 und besonders bevorzugt kleiner als 1/6 ist. So hält sich das radiale Einbaumaß auch bei verhältnismäßig großen Wellen in Grenzen.

Weiterhin ist es zweckmäßig, wenn der Rotor einstückig ausgeführt ist. Dies spart Zeit und Kosten bei der Herstellung und vor allem bei der Montage des Rotors.

Bevorzugt wird eine Ausführungsform der Erfindung, bei der der Rotor einen ringförmigen Ansatz aufweist, dessen Stirnseiten oder Teile davon die Dichtflächen bilden. Da beide Dichtflächen Teile des ringförmigen Ansatzes sind, wird weniger Platz in Anspruch genommen als bei Verwendung von je einem Träger für jede Dichtfläche. Darüber hinaus kann der ringförmige Ansatz in axialer Richtung relativ dünn ausgeführt werden, da die Dichtflächen auf den gegenüberliegenden Deckelflächen des ringförmigen Ansatzes liegen, so daß sich die auf die Dichtflächen ausgeübten Kräfte ausgleichen. Auch hierdurch wird axiale Bauhöhe eingespart. Die axiale Höhe des Ansatzes muß allerdings ausreichend sein, um zwischen den Gleitdichtflächen, die durch die Stirnseiten des Ansatzes gebildet werden, noch eine radiale Bohrung bzw. einen Durchgang, der auch einen nichtrunden, schmalen Querschnitt z. B. eines Langlochs haben kann, unterbringen zu können.

In einer alternativen Ausführungsform der Erfindung ist der Rotor mehrteilig ausgeführt, wobei er mindestens einen Kern und mindestens einen aufgeschobenen Ring aufweist. Dabei bilden die Stirnseiten des aufgeschobenen Rings oder Teile davon die Dichtflächen. Diese Ausgestaltung ist vorteilhaft, da sie eine einfachere Herstellung und Montage des Rotors erlaubt. Der aufgeschobene Ring bildet dabei vorzugsweise den ringförmigen Ansatz oder weist den ringförmigen Ansatz auf, an welchem die axialen Dichtflächen angeordnet sind.

Besonders vorteilhaft ist es dabei, wenn der mindestens eine aufgeschobene Ring über mindestens einem Mitnehmerstift mit dem mindestens einen Kern verbunden ist. So sind die Drehbewegungen des Kerns und des aufgeschobenen Rings aneinander gekoppelt.

Besonders bevorzugt wird eine Ausführungsform der Erfindung, bei der das feststehende Teil den Querschnitt eines U-Profils hat und eine ringförmig umlaufende Klammer bildet, wobei die Schenkel des U-Profils axial von außen die Gleitringe und den Rotor oder Teile davon umgreifen. Auf diese Weise entsteht eine besonders kompakte Bauform.

Dabei ist es zweckmäßig, wenn das feststehende Teil aus einem Ring mit L-Profil-Querschnitt und einem daran befestigten Ring besteht, welcher das L-Profil zu einem U-Profil ergänzt. So kann das feststehende Teil bis auf den Ring einstückig ausgeführt werden. Nach der Montage der übrigen Teile wird der Ring befestigt und ergänzt, das L-Profil zu einem U-Profil, das die Gleitringe und den Rotor oder Teile davon umgreift. Vorzugsweise weist der Ring an seiner Außenseite ein Gewinde auf, mit Hilfe dessen der Ring in das L-Profil eingeschraubt werden kann. Alternativ kann er mit zusätzlichen Schrauben an dem L-Profil befestigt werden. Ebenso ist eine Schweiß-, Löt- oder Klebverbindung denkbar.
Zweckmäßigerweise erstrecken sich dabei sowohl der (einstückige) Rotor als auch das feststehende Teil der Drehdurchführung axial über die volle Höhe Drehdurchführung, wobei der Rotor radial innerhalb des feststehenden Teil angeordnet ist und ein ringförmiger Ansatz des Rotors radial mit einwärts ragenden U-Schenkeln des feststehenden Teil überlappt und zwischen diesen überlappenden Teilen die Gleitringe angeordnet sind, von denen einer auch einstückig mit dem feststehenden Teil ausgebildet sein könnte

Erfindungsgemäß sind die Gleitringe hydrostatisch kompensiert. Wird ein Gleitring mit gegenüberliegenden Stirnflächen gleicher Größe von einem Fluid, das mit Druck beaufschlagt ist, umflossen, so sind die von beiden Seiten auf den Gleitring wirkenden Kräfte gleich groß und der Gleitring ist kräftefrei. Der hydrostatische Druck auf einer Dichtfläche eines Gleitrings, die auf der entgegengesetzten Gleitfläche eines rotierenden Teils abläuft, nimmt mit dem Abstand von der mit Fluid gefüllten Kammer ab und beträgt am anderen Ende der Gleitrings null. Daher ist bei gleicher Fläche der Ober- und Unterseiten des Gleitrings die Kraft auf die Seite der Gleitfläche geringer als die Kraft auf die gegenüberliegende Seite. Wird dieses Kräfteungleichgewicht nicht ausgeglichen, so wird der Gleitring durch das unter Druck stehende Fluid zusätzlich zu den Federn sehr fest gegen die zweite Dichtfläche gedrückt und kann im Extremfall trocken laufen und sich fest fressen. Dies kann vermieden werden, indem die Größen der vom Fluid umflossenen Flächen auf der Ober- und Unterseite des Gleitrings so bemessen werden, daß sich die angreifenden Kräfte ausgleichen, obwohl der Druck auf die Gleitflächen in radialer Richtung abfällt. Dabei ist es vorteilhaft, wenn die Gleitringe fast vollständig, d. h. in der Praxis zwischen 90 % und 100%, vorzugsweise zu etwa 95 % hydrostatisch kompensiert sind.

Für die Durchführung bestimmter Fluide wird eine Ausführungsform der Erfindung bevorzugt, bei der die Gleitringe aus einer technischen Keramik oder Hartmetall hergestellt sind. Solche Keramiken oder auch Hartmetalle sind hochfest und besitzen gute Gleiteigenschaften, während sie nur einem geringen Verschleiß unterliegen. Alternativ dazu können die Gleitringe wie aus dem Stand der Technik bekannt aus einer Stahl/Bronze Legierung hergestellt werden.

Weitere Merkmale, Vorzüge und Anwendungsmöglichkeiten der vorliegenden Erfindung ergeben sich aus der folgenden Beschreibung einer bevorzugten Ausführungsform zusammen mit den beiliegenden Figuren:
Figur 1 zeigt eine bevorzugte Ausführungsform der vorliegenden Erfindung.
Figur 2 zeigt eine vergrößerte abgebrochene Darstellung der Ausführungsform der Erfindung aus Figur 1.
Figur 3 zeigt eine zweite Ausführungsform der vorliegenden Erfindung.
Figur 4 zeigt eine alternative Ausführungsform der vorliegenden Erfindung.

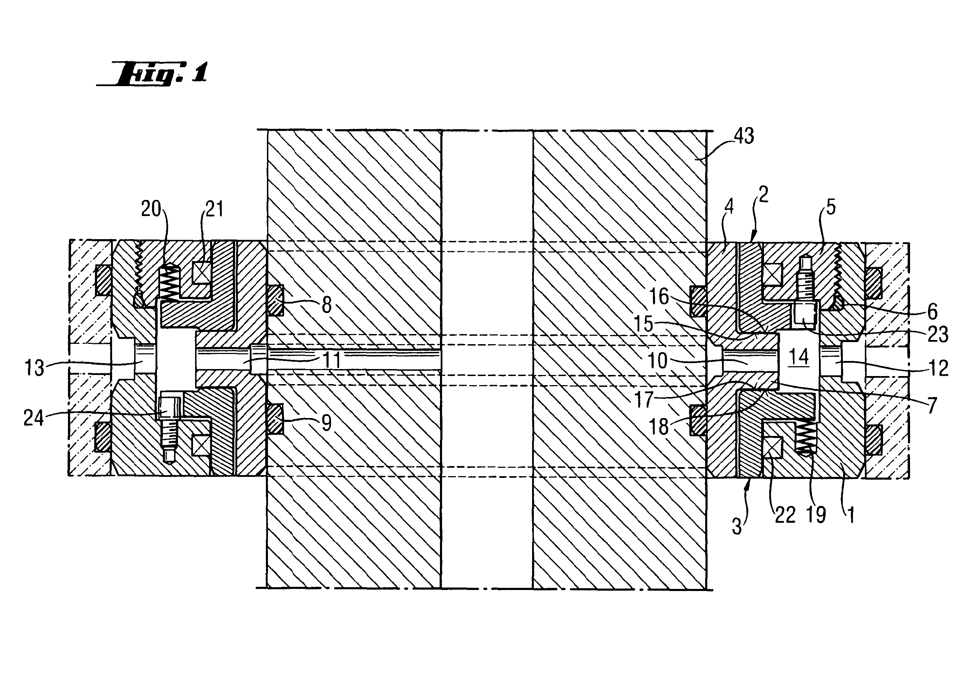

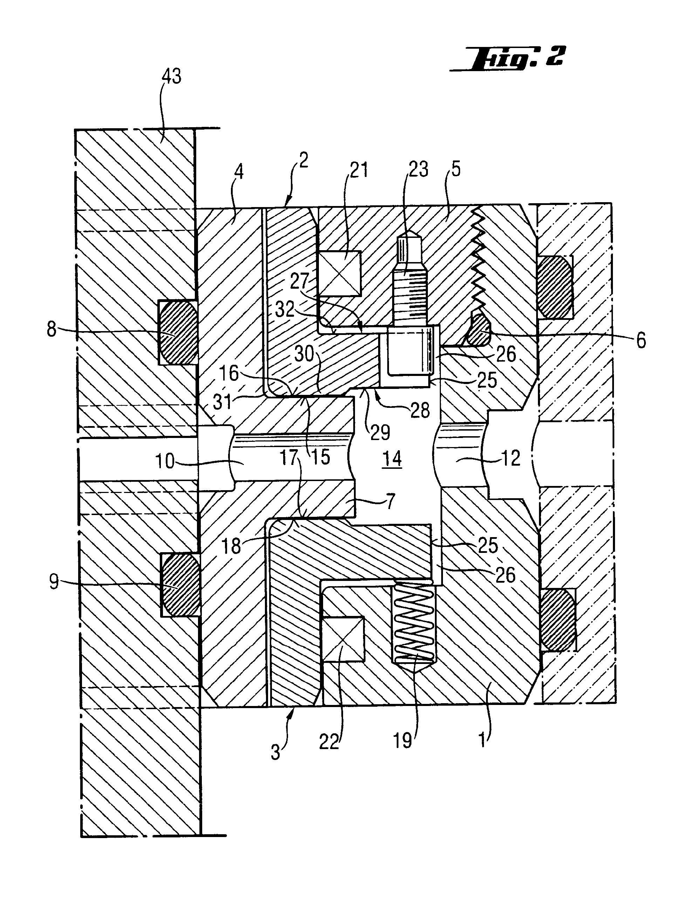

Die in den Figuren 1 und 2 dargestellte Ausführungsform der erfindungsgemäßen Drehdurchführung besteht aus vier wesentlichen Funktionselementen, dem feststehenden Teil 1, den Gleitringen 2, 3 sowie dem Rotor oder drehenden Teil 4. Das feststehende Teil 1 der Drehdurchführung ist so ausgeführt, daß es eine ringförmig umlaufende Klammer bildet, die die anderen Elemente zumindest teilweise umgreift und zusammenhält. Um eine Montage der beiden Gleitringe 2, 3 und des Rotors 4 zu ermöglichen und um diese beiderseits abzustützen, ist die obere Stirnseite des feststehenden Teils 1 aus einem einschraubbaren Ring 5 vorgesehen. Damit über das Gewinde des Ringes 5 kein Fluid nach außen dringen kann, ist das Gewinde am unteren Ende mit einem umlaufenden O-Ring 6 abgedichtet. Der Rotor 4 ist in der gezeigten Ausführungsform einstückig ausgeführt und weist eine im wesentlichen hohlzylindrische Form auf, wobei auf der Außenseite des Zylinders symmetrisch in der Hälfte der Höhe ein ringförmiger Ansatz 7 vorgesehen ist. Der hohlzylinderförmige Rotor 4 kann über eine Hohlwelle (43) geschoben werden, wobei zwei radial umlaufende O-Ringdichtungen 8, 9 den Rotor gegen die Welle abdichten. Wenn der Rotor zusätzlich zu seinem Sitz auf den O-Ringen 8, 9 auf der Welle fixiert werden soll, so kann er durch Kleben oder Schrauben befestigt werden. Feststehender Teil 1 und Rotor 4 haben in etwa dieselbe axiale Höhe bzw. Länge und sind in derselben Radialebene angeordnet. Sie definieren dadurch auch die gesamte axiale Höhe der Drehdurchführung.

Um ein Einströmen des Fluids in die Welle zu ermöglichen, ist der Rotor in der gezeigten Ausführungsform mit zwei gegenüberliegend angeordneten Durchflußkanälen 10, 11 versehen, die symmetrisch in der Mitte des ringförmigen Ansatzes 7 angeordnet sind. Es versteht sich, daß auch nur ein Kanal oder mehrere über den Umfang verteilte Kanäle vorgesehen sein können, da der Raum 14 den Ansatz 7 als ein zusammenhängendes Volumen ringförmig umgibt.

Um ein Austreten des Fluids zwischen dem Rotor 4 und der Welle zu verhindern, sind die O-Ringdichtungen 8, 9 in axialer Richtung auf beiden Seiten der Durchflußkanäle 10, 11 angeordnet. Der Hohlzylinder des Rotors 4 ist im wesentlichen so bemessen, daß sein Außendurchmesser kleiner ist als der Innendurchmesser des feststehenden Teils 1. Lediglich der ringförmige Ansatz 7 ragt mit seinem Außendurchmesser in die von dem feststehenden Teil 1 gebildete ringförmige Klammer hinein.

Ebenso wie der Rotor 4 weist das feststehende Teil 1 Durchflußkanäle 12, 13 auf, die die Außenseite des feststehenden Teils 1 mit dem Innenraum 14 der von dem feststehenden Teil 1 gebildeten Klammer verbinden. Aus dem Innenraum 14 der Klammer strömt das Fluid durch die Durchlaßkanäle 10, 11 des Rotors 4 in die Welle oder auch in umgekehrter Richtung.
Um eine Abdichtung des Innenraums 14 des feststehenden Elements 1 und der Durchflußkanäle 10,11,12,13 gegen den Außenbereich der Drehdurchführung zu erreichen, ist je eine Gleitringdichtung oberhalb bzw. unterhalb der Durchlaßkanäle 10, 11, 12, 13 vorgesehen. Die Gleitringdichtungen bestehen im wesentlichen aus jeweils zwei aufeinander ablaufenden bzw. gleitenden Gleitflächen 15, 16 bzw. 17, 18. Betrachtet man zunächst nur die obere Gleitringdichtung, so sieht man, daß zwischen dem feststehenden Teil 1 und dem Rotor 4 ein L-förmiger Gleitring 2 angeordnet ist, der mit geringem Spiel zwischen dem feststehenden 1 und dem drehenden Teil 4 sitzt. Einer der Schenkel des L-förmigen Gleitrings 2 erstreckt senkrecht zur Drehachse radial nach außen. Der Gleitring 2 weist an der Unterseite seines zur Drehachse senkrechten Schenkels einen ringförmig umlaufenden Ansatz 30 auf, dessen ebene untere Fläche 15 die erste Dichtfläche der Gleitringdichtung bildet. Die Dichtfläche 15 des Gleitrings 2 gleitet auf einer zweiten Gleitfläche 16, die von einer der Deckelflächen des ringförmigen Ansatzes 7 des Rotors 4 gebildet wird. Die zweite Gleitringdichtung unterhalb der Durchflußkanäle 10, 11, 12, 13 weist identische Merkmale wie die erste Gleitringdichtung auf, jedoch ist sie um die Achse der Durchführungsöffnungen 10, 11, 12, 13 gespiegelt. Damit die aufeinander gleitenden Dichtflächen 15, 16 bzw. 17, 18 dichtend wirken können, werden die Gleitringe 2, 3 von über den Umfang der Dichtungen verteilten Federn 19, 20, die sich gegen das feststehende Teil 1 abstützen gegen die Dichtflächen 16, 18 des ringförmigen Ansatzes 7 des Rotors 4 gedrückt. Die zweiten Seiten der L-förmigen Gleitringe 2, 3 sind mit Hilfe von ringförmigen Dichtringen 21, 22 gegen das feststehende Teil gedichtet. Dabei sind die Dichtringe 21, 22 an den zur Drehachse parallelen Schenkeln der L-förmigen Gleitringe 2, 3 angeordnet. Die Dichtringe 21, 22 weisen einen im wesentlichen U-förmigen Querschnitt auf, so daß sich die Gleitringe 2, 3 entlang der Dichtringe 21, 22 leicht verschieben lassen. Um ein Mitdrehen der Gleitringe 2, 3 mit dem Rotor 4 zu verhindern, sind an dem feststehenden Teil 1 Stifte 23, 24 vorgesehen, die von dem oberen bzw. dem unteren Schenkel des feststehenden Teils 1 in den Innenraum 14 hineinragen und durch die Gleitringe 2, 3 durchgreifen, so daß sich diese nicht mehr gegen das feststehende Teil 1 verdrehen lassen.

In der dargestellten Ausführungsform sind die Gleitringe 2, 3 aus einer technischen Keramik hergestellt. Diese Keramiken zeigen gute Gleiteigenschaften während sie hochfest und abriebsarm sind.

Die L-förmige Ausgestaltung der Gleitringe 2, 3 und die Tatsache, daß ihre zur Drehachse senkrechten Schenkel sowohl auf der Oberseite 27 als auch auf der Unterseite 28 von dem Fluid umflossen sind, ermöglicht eine hydrostatische Kompensation der Gleitringe 2, 3. Die Funktion der hydrostatischen Kompensation kann besonders einfach anhand der Figur 2 verstanden werden. Das radial außenliegende Ende 25 des zur Drehachse senkrechten Schenkels des L-förmigen Gleitrings 3 hat einen ausreichenden Abstand zum feststehenden Teil 1, so daß ein Kanal 26 gebildet wird, durch den das Fluid aus der ringförmigen Kammer 14 auf die Oberseite 27 des zur Drehachse senkrechten Schenkels strömen kann. Der Druck des Fluids ist dabei konstant und auf allen Seiten des Gleitrings 3 gleich groß. Die Kraft, die zusätzlich zu der Kraft der Federn 19 auf die Fläche 32 der Oberseite 27 des zur Drehachse senkrechten Schenkels wirkt, ist gleich dem Produkt aus dem Druck und der Größe der oberen Fläche 32. Auf der Unterseite 28 des zur Drehachse senkrechten Schenkels greift ebenfalls eine hydrostatische Kraft an. Die Fläche der Unterseite 28 setzt sich aus zwei Abschnitten zusammen: aus der Fläche 29 des Schenkels zwischen dem radial außenliegenden Ende 25 und dem Beginn des ringförmigen Ansatzes 30 und aus der Dichtfläche 15 des ringförmigen Ansatzes 30. Die auf die Fläche 29 wirkende Kraft ist wieder gleich dem Produkt aus dem Druck des Fluids und der Größe der Fläche 29. Zum Berechnen der Kraft auf die Dichtfläche 15 hingegen muß berücksichtigt werden, daß der Druck entlang der Dichtfläche 15 mit zunehmendem Abstand von der Kammer 14 abnimmt. Die auf die Fläche wirkende Kraft berechnet sich dann als das Integral des Drucks über die Fläche. Da die Dichtfläche 15 im Zusammenwirken mit der Dichtfläche 16 des Rotors ein Austreten des Fluids in den hinter dem ringförmigen Ansatz 30 liegenden Bereich 31 verhindert, wirkt dort keine hydrostatische Kraft auf den Schenkel. Die insgesamt auf die Unterseite 28 des Schenkels wirkende Kraft ist gleich der Summe aus den beiden Beiträgen. Ist die Summe der Oberfläche 29 und der Dichtfläche 15 gleich der oberen Fläche 27 des Schenkels, so wirkt aufgrund der Druckabnahme entlang der Dichtfläche 15 effektiv eine Kraft von oben auf den Schenkel. Die Position der Dichtfläche wird nun so gewählt, daß sich die von unten und von oben auf den Schenkel wirkenden Kräfte gerade aufheben. Dieser Zustand wird als hydrostatische Kompensation bezeichnet. Auch der zweite Gleitring 3 ist in der gezeigten Ausführungsform hydrostatisch kompensiert.

Im kompensierten Zustand werden die Dichtringe 2, 3 nur von den Federn 19, 20 gegen die Dichtflächen 16, 18 des Rotors gedrückt, so daß ein Trockenlaufen der Gleitringdichtungen verhindert wird.

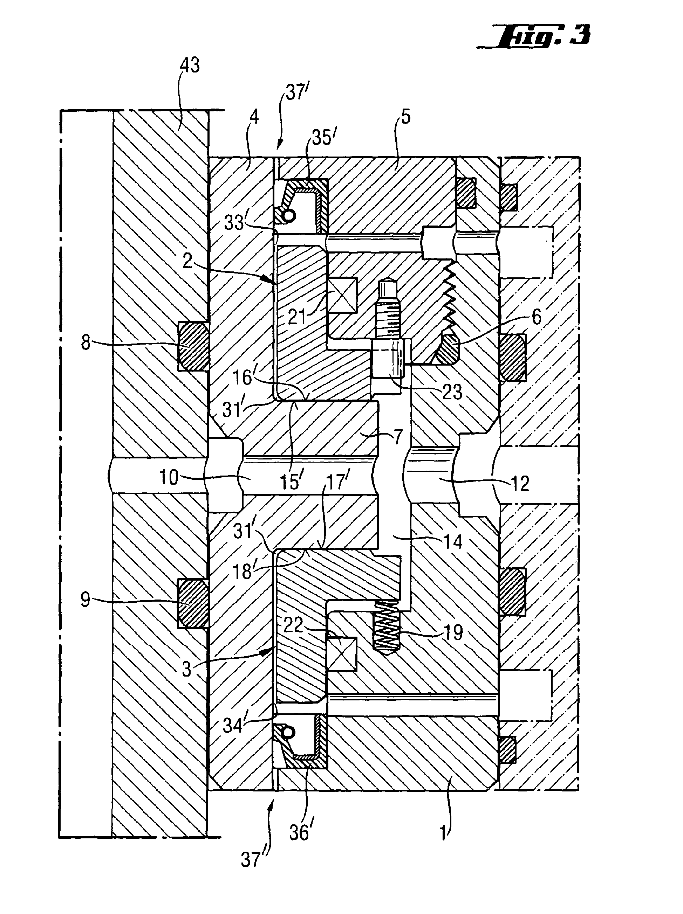

Figur 3 zeigt eine weitere Ausführungsform der Erfindung bei der die Leckräume 31', 33', 34' außerhalb der Gleitringdichtungen 15', 16' bzw. 17', 18' zusätzlich mit ringförmigen Leckraumdichtungen 35', 36' gegenüber der Umgebung 37' der Drehdurchführung abgedichtet sind. So kann das unvermeidlich durch die Gleitringdichtungen (15', 16' bzw. 17', 18') austretende Fluid nicht in den Bereich (37') außerhalb der Drehdurchführung gelangen.

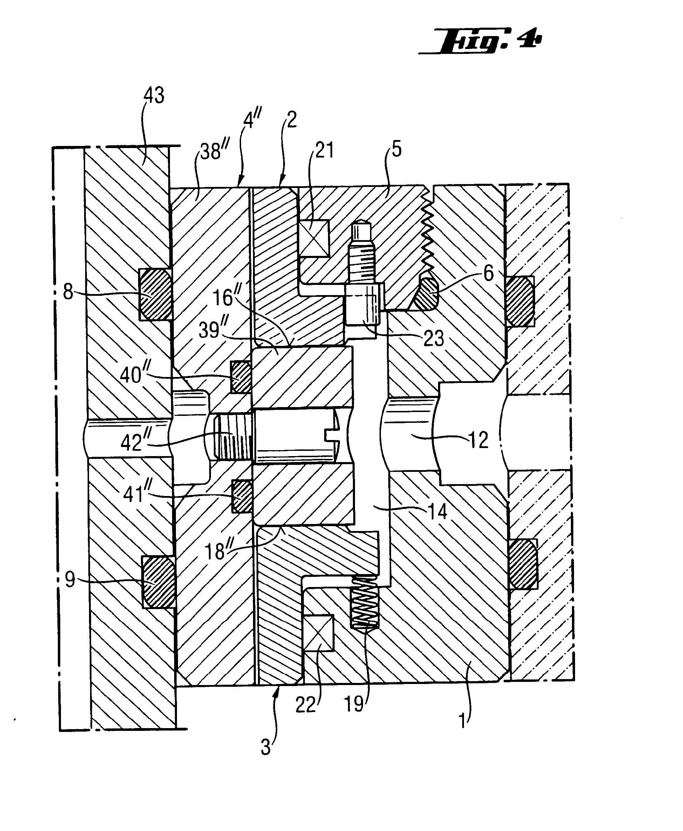

Figur 4 zeigt eine alternative Ausführungsform der in den Figuren 1 und 2 gezeigten Ausführungsform der Drehdurchführung, bei der der Rotor 4" zweiteilig ausgeführt ist. Er setzt sich aus einem hohlzylinderförmigen Kern 38" und einem auf halber Höhe des Kerns 28" aufgeschobenen Ring 39" zusammen, so daß die beiden Teile 38" und 39" des Rotors 4" zusammen in etwa die gleiche äußere Form haben wie der einteilige Rotor 4 aus den Figuren 1 und 2. Der aufgeschobene Ring 39" weist ein Spiel gegenüber dem Kern 38" auf und der Übergang zwischen den beiden Elementen 38", 39" ist mit Hilfe zweier O-Ringe 40" und 41" gegen die Umgebung gedichtet. Der aufgeschobene Ring 39" weist Durchflußbohrungen für das Fluid auf, die mit den Bohrungen des Kerns 38" fluchten, so daß das Fluid in die Welle einfließen kann. Damit sich der aufgeschobene Ring 39" mit der Welle und dem Kern 38" des Rotors 4" mitdrehen kann ist er mit Hilfe zweier auf gegenüberliegenden Seiten der Drehdurchführung angeordneten Mitnehmerstiften 42" mit dem Kern 38" verbunden. Wie bei dem ringförmigen Ansatz 7 des einteiligen Rotors 4 bilden auch die Stirnflächen des aufgeschobenen Rings 39" die Dichtflächen 16", 18" des Rotors 4".

### Bezugszeichenliste

- 1: feststehender Teil
- 2: Gleitring
- 3: Gleitring
- 4: Rotor
- 5: Ring
- 6: O-Ring
- 7: ringförmiger Ansatz
- 8: O-Ringdichtung
- 9: O-Ringdichtung
- 10: Durchflußkanal
- 11: Durchflußkanal
- 12: Durchlaßkanal
- 13: Durchlaßkanal
- 14: Innenraum
- 15: Gleitfläche
- 16: Gleitfläche
- 17: Gleitfläche
- 18: Gleitfläche
- 19: Feder
- 20: Feder
- 21: Dichtring
- 22: Dichtring
- 23: Stift
- 24: Stift
- 25: außenliegendes Ende
- 26: Kanal 26
- 27: Oberseite
- 28: Unterseite
- 29: Fläche
- 30: ringförmiger Ansatz
- 31: Bereich hinter dem ringförmigen Ansatz
- 32: Fläche der Oberseite 27
- 33: Bereich außerhalb der Gleitringdichtung
- 34: Bereich außerhalb der Gleitringdichtung
- 35': Reibdichtung
- 36': Reibdichtung
- 37': Umgebung der Drehdurchführung
- 38": Kern des zweiteiligen Rotors
- 39": aufgeschobener Ring
- 40": O-Ring-Dichtung
- 41": O-Ring-Dichtung
- 42": Mitnehmerstift
- 43: Hohlwelle

## Patentansprüche

1. Radiale Drehdurchführung mit mindestens einem Rotor (4) und mindestens einem feststehenden Teil (1), wobei der mindestens eine Rotor (4) mindestens zwei Dichtflächen aufweist und wobei zwischen dem feststehenden Teil und dem Rotor zwei Gleitringe (2, 3) mit insgesamt mindestens zwei Dichtflächen angeordnet sind, wobei die Dichtflächen (15, 17) der Gleitringe (2, 3) mit den Rotordichtflächen (16, 18) zusammenwirken, und mit mindestens einem radialen Zufuhrdurchgang zwischen den Paaren (15, 16 : 17, 18) zusammenwirkender Dichtflächen, wobei die Normalen auf die Dichtflächen des Rotors (4) axial voneinander weg weisen, wobei die Normalen auf die Dichtflächen der Gleitringe (2, 3) axial aufeinander zu gerichtet sind, **dadurch gekennzeichnet, daß** die Gleitringe (2, 3) hydrostatisch kompensiert sind.

2. Radiale Drehdurchführung nach Anspruch 1, **dadurch gekennzeichnet, daß** der Rotor (4) einstückig ausgeführt ist.

3. Radiale Drehdurchführung nach Anspruch 1 oder 2, **dadurch gekennzeichnet, daß** der Rotor (4) einen ringförmigen Ansatz (7) aufweist, dessen Stirnseiten oder Teile davon die Dichtflächen bilden bzw. tragen.

4. Radiale Drehdurchführung nach einem der Ansprüche 1 bis 3, **dadurch gekennzeichnet, daß** das feststehende Teil (1) den Querschnitt eines U-Profils hat und eine ringförmig umlaufende Klammer bildet, wobei die Schenkel des U-Profils axial von außen die Gleitringe (2, 3) und den Rotor (4) oder Teile davon umgreifen.

5. Radiale Drehdurchführung nach einem der Ansprüche 1 bis 4, **dadurch gekennzeichnet, daß** das feststehende Teil (1) aus einem Ring mit L-Profil-Querschnitt und einem daran befestigten Ring (5) besteht, welcher das L-Profil zu einem U-Profil ergänzt.

6. Radiale Drehdurchführung nach einem der Ansprüche 4 oder 5, **dadurch gekennzeichnet, daß** die Gleitringe (2, 3) zwischen den Schenkeln des U-förmigen feststehenden Teils (1) und dem ringförmig umlaufenden Ansatz (7) des Rotors (4) angeordnet sind.

7. Radiale Drehdurchführung nach einem der Ansprüche 1 bis 6, **dadurch gekennzeichnet, daß** die Gleitringe (2,3) zwischen 90 % und 100 %, vorzugsweise zu etwa 95 %, hydrostatisch kompensiert sind.

8. Radiale Drehdurchführung nach einem der Ansprüche 1 bis 7, **dadurch gekennzeichnet, daß** sie eine axiale Höhe von weniger als 40 mm, vorzugsweise weniger als 20 mm und besonders bevorzugt von 18 mm aufweist.

9. Radiale Drehdurchführung nach einem der Ansprüche 1 bis 8, **dadurch gekennzeichnet, daß** das Verhältnis der Nennweite (Durchmesser der Welle) zur axialen Höhe der Drehdurchführung größer als 1, vorzugsweise größer als 1,5 und besonders bevorzugt größer als 2 ist.

10. Radiale Drehdurchführung nach einem der Ansprüche 1 bis 9, **dadurch gekennzeichnet, daß** das maximale Verhältnis zwischen der radialen Dicke der Drehdurchführung und ihrer Nennweite kleiner als 1/3, vorzugsweise kleiner als 1/4 und besonders bevorzugt kleiner als 1/6 ist.

11. Radiale Drehdurchführung nach einem der Ansprüche 1 bis 10, **dadurch gekennzeichnet, daß** die Gleitringe (2, 3) aus einer technischen Keramik oder Hartmetall hergestellt sind.

12. Radiale Drehdurchführung nach einem der Ansprüche 1 bis 11, **dadurch gekennzeichnet, daß** die außerhalb der Gleitringdichtungen (15', 16' bzw. 17', 18') liegenden Leckräume (31', 33', 34') der Drehdurchführung mit ringförmigen Leckraumdichtungen (35', 36') gegen die Umgebung (37') abgedichtet sind.

13. Radiale Drehdurchführung nach einem der Ansprüche 1 bis 12, **dadurch gekennzeichnet, daß** der Rotor (4") mehrteilig ausgeführt ist und mindestens einen Kern (38") und mindestens einen aufgeschobenen Ring (39") aufweist, wobei die Stirnseiten des aufgeschobenen Rings (39") oder Teile davon die Dichtflächen bilden bzw. tragen.

14. Radiale Drehdurchführung nach Anspruch 13, **dadurch gekennzeichnet, daß** der mindestens eine aufgeschobene Ring (39") mit mindestens einem Mitnehmerstift 42" mit dem mindestens einen Kern 38" verbunden ist.

## Claims

1. A radial rotary transfer assembly comprising at least one rotor (4) and at least one stationary part (1), wherein the at least one rotor (4) has at least two sealing surfaces and wherein two sliding rings (2, 3) with overall at least two sealing surfaces are arranged between the stationary part and the rotor, wherein sealing surfaces (15, 17) of the sliding rings (2, 3) co-operate with the rotor sealing surfaces (16, 18), and with at least one radial feed passage between the pairs (15, 16; 17, 18) of co-operating sealing surfaces, wherein the normals to the sealing surfaces of the rotor (4) face axially away from each other, wherein the normals to the sealing surfaces of the sliding rings (2, 3) are directed away axially towards each other, **characterised in that** the sliding rings (2, 3) are hydrostatically compensated.

2. A radial rotary transfer assembly as set forth in Claim 1, **characterised in that** the rotor (4) is in one piece.

3. A radial rotary transfer assembly as set forth in Claim 1 or Claim 2, **characterised in that** the rotor (4) has an annular projection (7) whose ends or parts thereof form or carry the sealing surfaces.

4. A radial rotary transfer assembly as set forth in one of claims 1 through 3, **characterised in that** the stationary part (1) is of the cross-section of a U-shaped profile and forms an annularly peripherally extending clamp, wherein the limbs of the U-shaped profile axially embrace from the outside the sliding rings (2, 3) and the rotor (4) or parts thereof.

5. A radial rotary transfer assembly as set forth in one of claims 1 through 4, **characterised in that** the stationary part (1) comprises a ring (5) of an L-shaped profile cross-section which is fixed thereto and which supplements the L-shaped profile to form a U-shaped profile.

6. A radial rotary transfer assembly as set forth in one of claims 4 or 5, **characterised in that** the sliding rings (2, 3) are arranged between the limbs of the U-shaped stationary part (1) and the annularly peripherally extending projection (7) of the rotor (4).

7. A radial rotary transfer assembly as set forth in one of claims 1 through 6, **characterised in that** the sliding rings (2, 3) are hydrostatically compensated at between 90% and 100%, preferably at about 95%.

8. A radial rotary transfer assembly as set forth in one of claims 1 through 7, **characterised in that** it is of an axial height of less than 40 mm, preferably less than 20 mm, and, particularly preferably, of 18 mm.

9. A radial rotary transfer assembly as set forth in one of claims 1 through 8, **characterised in that** the ratio of the nominal width (diameter of the shaft) to the axial height of the rotary transfer assembly is greater than 1, preferably greater than 1.5, and, particularly preferably, greater than 2.

10. A radial rotary transfer assembly as set forth in one of claims 1 to 9, **characterised in that** the maximum ratio between the radial thickness of the rotary transfer assembly and the nominal width thereof is less than 1/3, preferably less than 1/4, and, particularly preferably, less than 1/6.

11. A radial rotary transfer assembly as set forth in one of claims 1 through 10, **characterised in that** the sliding rings (2, 3) are made from a technical ceramic or hard metal.

12. A radial rotary transfer assembly as set forth in one of claims 1 through 11, **characterised in that** the leakage spaces (31', 33', 34'), which are outside the sealing ring seals (15', 16' and 17', 18' respectively) of the rotary transfer assembly are sealed in relation to the surrounding region (37') with annular leakage space seals (35', 36').

13. A radial rotary transfer assembly as set forth in one of claims 1 through 12, **characterised in that** the rotor (4") is of a multi-part construction and has at least one core (38") and at least one pushed-on ring (39"), wherein the ends of the pushed-on ring (39") or parts thereof form or carry the sealing surfaces.

14. A radial rotary transfer assembly as set forth in Claim 13, **characterised in that** the at least one pushed-on ring (39") is connected to the at least one core (38") with at least one entrainment pin (42").

## Revendications

1. Passage tournant radial comportant au moins un rotor (4) et au moins une partie fixe (1), le rotor (4) au moins présentant au moins deux surfaces d'étanchéité et deux bagues de glissement (2, 3) qui présentent au total au moins deux surfaces d'étanchéité disposées entre la partie fixe et le rotor, les surfaces d'étanchéité (15, 17) des bagues de glissement (2, 3) coopérant avec les surfaces d'étanchéité (16, 18) du rotor, et au moins un passage d'amenée radial ménagé entre les paires (15, 16 ; 17, 18) de surfaces d'étanchéité coopérantes, les normales aux surfaces d'étanchéité du rotor (4) pointant axialement à l'opposé l'une de l'autre, les normales aux surfaces d'étanchéité de la bague de glissement (2, 3) pointant axialement en direction l'une de l'autre, **caractérisé en ce que** les bagues de glissement (2, 3) sont soumises à une compensation hydrostatique.

2. Passage tournant radial selon la revendication 1, **caractérisé en ce que** le rotor (4) est réalisé d'une seule pièce.

3. Passage tournant radial selon la revendication 1 ou 2, **caractérisé en ce que** le rotor (4) comporte un appendice annulaire (7) dont les côtés frontaux ou des parties de ceux-ci forment respectivement supportent les surfaces d'étanchéité.

4. Passage tournant radial selon l'une des revendications 1 à 3, **caractérisé en ce que** la partie fixe (1) a le profil d'un U en coupe transversale et forme une bride de fixation s'étendant annulairement, les branches du profil en U entourant axialement depuis l'extérieur les bagues de glissement (2, 3) et le rotor (4) ou des parties de ceux-ci.

5. Passage tournant radial selon l'une des revendications 1 à 4, **caractérisé en ce que** la partie fixe (1) est constituée d'une bague ayant un profil en L en coupe transversale et d'une bague (5) qui est fixée à la précédent et qui complète le profil en L pour former un profil en U.

6. Passage tournant radial selon l'une des revendications 4 ou 5, **caractérisé en ce que** les bagues de glissement (2, 3) sont disposées entre les branches de la partie fixe (1) en forme de U et l'appendice (7), s'étendant annulairement, du rotor (4).

7. Passage tournant radial selon l'une des revendications 1 à 6, **caractérisé en ce que** les bagues de glissement (2, 3) sont soumises à une compensation hydrostatique comprise entre 90% et 100%, avantageusement jusqu'à environ 95%.

8. Passage tournant radial selon l'une des revendications 1 à 7, **caractérisé en ce qu'**il a une hauteur axiale de moins de 40 mm, avantageusement de moins de 20 mm et de façon particulièrement préférée de 18 mm.

9. Passage tournant radial selon l'une des revendications 1 à 8, **caractérisé en ce que** le rapport du diamètre nominal (diamètre de l'arbre) à la hauteur axiale du passage tournant est supérieur à 1, avantageusement supérieur à 1,5 et de façon particulièrement préférée supérieur à 2.

10. Passage tournant radial selon l'une des revendications 1 à 9, **caractérisé en ce que** le rapport maximal entre l'épaisseur radiale du passage tournant et son diamètre nominal est inférieur à 1/3, avantageusement inférieur à 1/4 et de façon particulièrement préférée inférieur à 1/6.

11. Passage tournant radial selon l'une des revendications 1 à 10, **caractérisé en ce que** les bagues de glissement (2, 3) sont fabriquées à partir d'une céramique technique ou d'un métal dur.

12. Passage tournant radial selon l'une des revendications 1 à 11, **caractérisé en ce que** des espaces de purge (31', 33', 34') du passage tournant, lesquels se trouvent à l'extérieur des garnitures d'étanchéité (15', 16' respectivement 17', 18') des bagues de glissement, sont rendus étanches vis-à-vis de l'environnement (37') au moyen de garnitures d'étanchéité annulaires (35', 36') d'espaces de purge.

13. Passage tournant radial selon l'une des revendications 1 à 12, **caractérisé en ce que** le rotor (4") est réalisé en plusieurs parties et comporte au moins un noyau (38") et au moins une bague poussée (39"), les côtés frontaux de la bague poussée (39") ou des parties de ceux-ci formant respectivement supportant les surfaces d'étanchéité.

14. Passage tournant radial selon la revendication 13, **caractérisé en ce qu'**une bague poussée (39") au moins est reliée à au moins une broche d'entraînement (42") au moyen du noyau (38") au moins.
